# EUROPEAN PATENT SPECIFICATION

(11) **EP 3 185 460 B1**
(45) Date of publication and mention of the grant of the patent: **26.01.2022**
(21) Application number: 16196799.7
(22) Date of filing: 02.11.2016
(51) Int. Cl.: H04L 5/00, H04W 8/00, H04W 76/14, H04W 4/08, H04W 72/02

(54) **METHOD AND DEVICE FOR WIRELESS CONNECTION ESTABLISHMENT**
VERFAHREN UND VORRICHTUNG ZUM AUFBAU EINER DRAHTLOSVERBINDUNG
PROCÉDÉ ET DISPOSITIF DE TRANSMISSION DE DONNÉES SANS FIL

(30) Priority: 24.12.2015 CN 201510991861
(43) Date of publication of application: 28.06.2017
(73) Proprietor: Xiaomi Inc., Beijing 100085 (CN)
(72) Inventor: LIANG, Xin, Beijing 100085 (CN); RU, Yi, Beijing 100085 (CN); WU, Guizhou, Beijing 100085 (CN)
(74) Representative: Steinbauer, Florian

(56) References cited:
- EP-A1- 2 849 412
- CN-A- 104 657 099
- US-A1- 2013 036 231

## Description

### TECHNICAL FIELD

The present invention generally relates to the technical field of wireless networks, and more particularly, to a method and device for establishing a wireless connection.

### BACKGROUND

Along with development of wireless network technologies, the Wireless Fidelity Peer to Peer (WiFi P2P) protocol specification released by the WiFi alliance supports formation of multiple WiFi devices into a P2P network, i.e. a P2P group, for intercommunication under the condition of no Access Point (AP). For example, a smart phone supporting WiFi P2P may directly establish a wireless connection with a smart television supporting WiFi P2P and transmit screen data, media resources and the like of the smart phone to the smart television to display or play through the established wireless connection.

In a related technology, establishment of a wireless connection between WiFi devices supporting a WiFi P2P protocol includes two processes: a device discovery process and a P2P group establishment process. For example, for establishment of a wireless connection between a smart television and a smart phone, the smart television needs to start a specified application program configured for WiFi P2P connection, broadcast a probe request data packet on channels 1, 6 and 11 at a 2.4GHz frequency band through the specified application program and then monitor probe request data packets from other devices on a randomly selected frequency band; the smart phone adopts the same manner for broadcasting and monitoring; and a device discovery process is completed when the two respectively detect the probe request data packets sent by each other on their own monitoring frequency bands. Then, the two send data packets to each other to negotiate about establishment of a P2P group and determine a group owner and a group client to complete connection.
CN 104 657 099A discloses a method, a device and a system for screen projection and belongs to the field of smart homes.
US 2013/036231 A1 discloses example method, apparatus, and computer program product embodiments to enable out-of-band short-range communication carrier transport switching for connection setup in device-to-device communication.
EP 2 849 412 A1 discloses a data processing method and device.

However, frequent handover of the WiFi device among channels 1, 6 and 11 at the 2.4G frequency band during establishment of the wireless connection will influence on normal use of other WiFi services, for example, reduction in transmission rates of said other WiFi services or incapability in normal use of said other WiFi services.

### SUMMARY

In order to solve the problem in the related technology, the present invention provides a method and device for establishing a wireless connection.

According to a first aspect of the present invention, a method for establishing a wireless connection by a smart device is provided according to claim 1.

Optionally, the P2P data packet may be a beacon data packet.

Optionally, the step that the current wireless working frequency band of the smart device is acquired may include that:
a wireless working frequency band acquisition request is sent to a router connected with the smart device; and
a wireless working frequency band returned by the router is received, and the returned wireless working frequency band is determined as the current wireless working frequency band.

According to a second aspect of the present invention, a method for establishing a wireless connection by a smart terminal is provided according to claim 4.

Optionally, the step that the wireless connection is established with the smart device at the wireless working frequency band according to the device information may include that:
the smart device is added into a P2P device list according to the device information; and
when a connection operation directed to the smart device is detected, the wireless connection is established with the smart device at the wireless working frequency band according to the device information.

Optionally, the step that the multiple wireless working frequency bands supported by the smart terminal are monitored may include that:
when an operation for opening a P2P discovery function is detected, a wireless frequency band list is acquired, wherein the wireless frequency band list includes the multiple wireless working frequency bands supported by the smart terminal; and
each wireless working frequency band in the wireless frequency band list is monitored to acquire the P2P data packet.

According to a third aspect of the present invention, a smart device adapted to establish a wireless connection is provided according to claim 6.

Optionally, the P2P data packet may be a beacon data packet.

Optionally, the acquisition module may be configured to send a wireless working frequency band acquisition request to a router connected with the smart device, receive a wireless working frequency band returned by the router, and determine the wireless working frequency band as the current wireless working frequency band.

According to a fourth aspect of the present invention, a smart terminal adapted to establish a wireless connection is provided according to claim 9.

Optionally, the connection module may be configured to add the smart device into a P2P device list according to the device information; and configured to, when a connection operation directed to the smart device is detected, establish the wireless connection with the smart device at the wireless working frequency band according to the device information.

Optionally, the monitoring module may be configured to, when an operation for opening a P2P discovery function is detected, acquire a wireless frequency band list, the wireless frequency band list including the multiple wireless working frequency bands supported by the smart terminal; and configured to monitor each wireless working frequency band in the wireless frequency band list to acquire the P2P data packet.

According to a fifth aspect not being part of the invention, a device for establishing a wireless connection is provided, which may include:
a processor; and
a memory configured to store an executable instruction of the processor,
wherein the processor may be configured to perform any method according to the invention.

In one particular embodiment, the steps of the method for establishing a wireless connection are determined by computer program instructions.

Consequently, according to a sixth aspect, the invention is also directed to a computer program according to claim 11.

This program can use any programming language and take the form of source code, object code or a code intermediate between source code and object code, such as a partially compiled form, or any other desirable form.

The invention is also directed to a computer-readable storage medium according to claim 12.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may achieve the following beneficial effects:

A current wireless working frequency band of a smart device is acquired; and a P2P data packet is periodically broadcast through the current wireless working frequency band, the P2P data packet at least including the device information of the smart device, and a smart terminal establishes a wireless connection with the smart device according to the received device information. Since the P2P data packet broadcast by the smart device at the current wireless working frequency band is at the same frequency band with other WiFi services on the smart device, handover may be not frequently performed among channels 1, 6 and 11 for broadcasting, and influence on normal use of other WiFi services can be avoided.

It is to be understood that the above general descriptions and detailed descriptions below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention.
Fig. 1 is a flow chart showing a method for establishing a wireless connection, according to an exemplary embodiment not being part of the invention;
Fig. 2 is a flow chart showing another method for establishing a wireless connection, according to an exemplary embodiment not being part of the invention;
Fig. 3 is a flow chart showing still another method for establishing a wireless connection, according to an exemplary embodiment not being part of the invention;
Fig. 4 is a block diagram of a device for establishing a wireless connection, according to an exemplary embodiment not being part of the invention;
Fig. 5 is a block diagram of another device for establishing a wireless connection, according to an exemplary embodiment;
Fig. 6 is a block diagram of still another device for establishing a wireless connection, according to an exemplary embodiment; and
Fig. 7 is a block diagram of yet another device for establishing a wireless connection, according to an exemplary embodiment not being part of the invention.

### DETAILED DESCRIPTION

In order to make a purpose, technical solutions and advantages of the present invention more clear, implementation modes of the present invention will be further described below with reference to the drawings in detail.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with some aspects related to the present invention as recited in the appended claims.

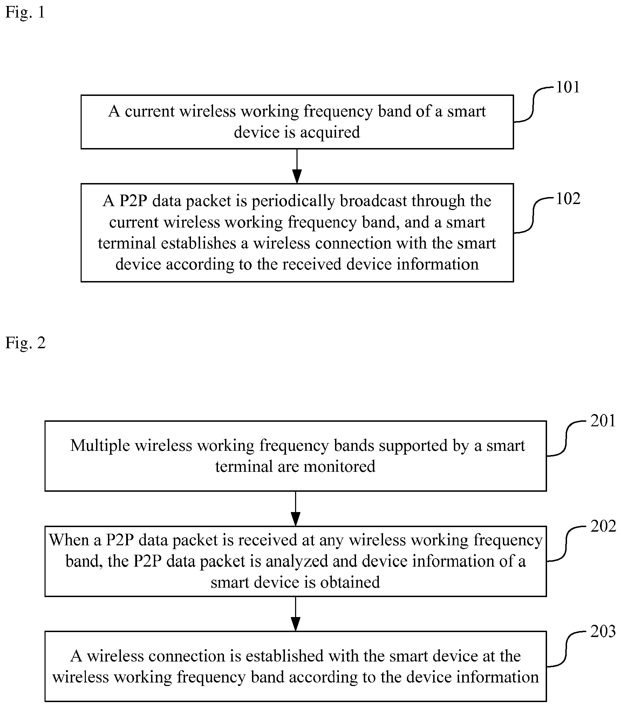

Fig. 1 is a flow chart showing a method for establishing a wireless connection, according to an exemplary embodiment not being part of the invention, and as shown in Fig. 1, the method is applied to a smart device and includes the following steps:
Step 101: a current wireless working frequency band of the smart device is acquired; and
Step 102: a P2P data packet is periodically broadcast through the current wireless working frequency band, and a smart terminal establishes a wireless connection with the smart device according to received device information.

Here, the P2P data packet at least includes the device information of the smart device.

According to the method provided by the embodiment not being part of the invention, the current wireless working frequency band of the smart device is acquired; and the P2P data packet is periodically broadcast through the current wireless working frequency band, the P2P data packet at least including the device information of the smart device, and a wireless connection is established with the smart device by the smart terminal according to the received device information. Since the P2P data packet broadcast by the smart device at the current wireless working frequency band is at the same frequency band with other WiFi services on the smart device, handover may be not frequently performed among channels 1, 6 and 11 for broadcasting, and influence on normal use of the other WiFi services is avoided.

After the step that the current wireless working frequency band of the smart device is acquired, the method further includes that:
a P2P group is established at the current wireless working frequency band based on the current wireless working frequency band, and the smart device is determined as a group owner of the P2P group.

The P2P data packet further includes identification information of the P2P group, and the smart terminal joins the P2P group according to the received device information and the identification information of the P2P group.

Optionally, the P2P data packet is a beacon data packet.

Optionally, the step that the current wireless working frequency band of the smart device is acquired includes that:
a wireless working frequency band acquisition request is sent to a router connected with the smart device; and
a wireless working frequency band returned by the router is received, and the wireless working frequency band is determined as the current wireless working frequency band.

All of the optional technical solutions may be freely combined to form optional embodiments not being part of the invention, which will not be elaborated one by one herein.

Fig. 2 is a flow chart showing another method for establishing a wireless connection, according to an exemplary embodiment not being part of the invention, and as shown in Fig. 2, the method is applied to a smart terminal and includes the following steps:
Step 201: multiple wireless working frequency bands supported by a smart terminal are monitored;
Step 202: when a P2P data packet is received at any wireless working frequency band, the P2P data packet is analyzed and device information of a smart device is obtained; and
Step 203: a wireless connection is established with the smart device at the wireless working frequency band according to the device information.

According to the method provided by the embodiment not being part of the invention, the multiple wireless working frequency bands supported by the smart terminal are monitored; when the P2P data packet is received at any wireless working frequency band, the P2P data packet is analyzed and the device information of the smart device is obtained; and the wireless connection is established with the smart device at the wireless working frequency band according to the device information. Since the smart terminal may monitor P2P data packets at all its supported wireless working frequency bands and establish the wireless connection with the smart device at the wireless working frequency band where the P2P data packet sent by the smart device is received, the smart device may not frequently switch channels 1, 6 and 11 for broadcasting, and the problem that other WiFi services of the smart device can not be normally used is solved.

Optionally, the step that the wireless connection is established with the smart device at the wireless working frequency band according to the device information includes that:
the smart device is added into a P2P device list according to the device information; and
when a connection operation directed to the smart device is detected, the wireless connection is established with the smart device at the wireless working frequency band according to the device information.

Optionally, the step that the multiple wireless working frequency bands supported by the smart terminal are monitored includes that:
when an operation for opening a P2P discovery function is detected, a wireless frequency band list is acquired, the wireless frequency band list including the multiple wireless working frequency bands supported by the smart terminal; and
each wireless working frequency band in the wireless frequency band list is monitored to acquire the P2P data packet.

The method further includes that:
the P2P data packet is analyzed and identification information of a P2P group is obtained; and
when the connection operation directed to the smart device is detected, the smart terminal joins the P2P group according to the device information and the identification information of the P2P group.

All of the optional technical solutions may be freely combined to form optional embodiments not being part of the invention, which will not be elaborated one by one herein.

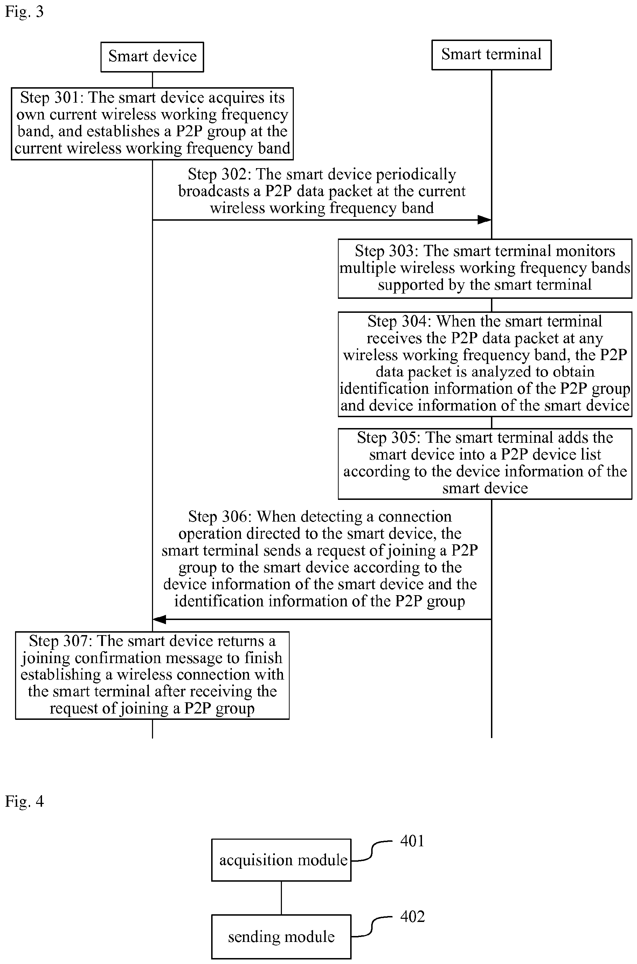

Fig. 3 is a flow chart showing still another method for establishing a wireless connection, according to an exemplary embodiment not being part of the invention. A smart device and a smart terminal therein serve as main bodies in interaction, and as shown in Fig. 3, the method includes the following steps.

Step 301: the smart device acquires its own current wireless working frequency band, and establishes a P2P group at the current wireless working frequency band.

In the embodiment not being part of the invention, the smart device has a WiFi function, may be connected to a router, and acquires a data resource such as an audio and a video from the Internet through the router. Under a normal condition, the router may keep working at a wireless working frequency band without changes, and the smart device, together with the router, is located at the same wireless working frequency band after being connected to the router. The smart device further supports the WiFi P2P protocol specification, and is configured to establish a wireless connection with another WiFi device supporting the WiFi P2P protocol specification, so that the smart device establishes the wireless connection with other WiFi device without the router, that is, the smart device forms a P2P group with said other WiFi device. Here, the smart device may be a smart television, said other WiFi device may be a smart terminal, such as a smart phone or a tablet computer, and there are no specific limits made in the present invention. For example, if said other WiFi device is a smart terminal, the smart device needs to acquire its own current wireless working frequency band before establishing the wireless connection with the smart terminal, and a detailed process is implemented as follows:
a wireless working frequency band acquisition request is sent to the router connected with the smart device; and a wireless working frequency band returned by the router is received, and
the wireless working frequency band is determined as the current wireless working frequency band, wherein the wireless working frequency band may be a 2.4G frequency band, a 5G frequency band and the like, which is not specifically limited in the present invention.

In another embodiment not being part of the invention, the smart device may further directly acquire its own current working frequency band, for example, related configuration information of a wireless port is detected to acquire the current working frequency band, and there are no specific limits made in the present invention.

It is to note that a P2P group formed by different WiFi devices through a WiFi P2P protocol includes a group owner and at least one group client. Here, the group client may send screen data, a media resource or the like to the group owner to display or play. Here, the media resource includes a text, a picture, a video, an audio and the like, which is not specifically limited in the present invention. Some WiFi devices only serve as group owners according to demands of users under normal conditions, so that a WiFi device usually serving as a group owner in P2P groups establishes a P2P group with the WiFi device itself being the group owner before the WiFi device establishes a wireless connection with another WiFi device. For example, for a smart television, during wireless connection of the smart television and a smart terminal, a user may usually send screen data of the smart terminal to the smart television and only adopt the smart television as a group owner, so that the smart television establishes a P2P group with the smart television itself being the group owner before establishing a connection with the smart terminal, and then the smart terminal directly joins the P2P group as a group client to simplify an establishment process of the wireless connection.

In the embodiment of the present invention, after acquiring the current wireless working frequency band, the smart device establishes a P2P group at the current wireless working frequency band based on the current wireless working frequency band, and serves as a group owner of the P2P group. In a specific implementation process, if the current wireless working frequency band of the smart device is 5,220MHz, the smart device establishes a P2P group at the 5,220MHz wireless working frequency band by virtue of a command "P2P_GROUP_ADD persistent freq=5220", and the establisher of the P2P group is determined as the group owner by default, wherein the persistent represents that a persistent P2P group is established, that is, the smart terminal is only needed to join the P2P group once, and the smart terminal may directly perform data transmission with the smart device through stored connection information in the future.

It is to note that the smart terminal directly joins the P2P group without negotiating about establishment of a P2P group after receiving a P2P data packet from the smart device, because the smart device establishes the P2P group before establishing a wireless connection with the smart terminal, so that the establishment process of the wireless connection is simplified.

Step 302: the smart device periodically broadcasts a P2P data packet at the current wireless working frequency band.

In the embodiment not being part of the invention, in order to avoid poor user experiences caused by bad influence of frequent handover of the smart device on other WiFi services of the smart device among channels 1, 6 and 11 at the 2.4G frequency band during establishment of the wireless connection, for example, reduction in transmission rates of said other WiFi services or incapability in normal use of said other WiFi services, the smart device in the embodiment of the present invention by default does not to broadcast a probe request data packet using channels 1, 6 and 11 but to periodically broadcast the P2P data packet at the current wireless working frequency band. The P2P data packet is a beacon data packet. The P2P data packet includes device information of the smart device and identification information of the P2P group. Here, the device information of the smart device includes a Media Access Control (MAC) address of the smart device, a name of the smart device and the like, which is not specifically limited in the present invention. The identification information of the P2P group at least includes a Service Set Identifier (SSID) of the P2P group. In addition, the P2P data packet is also needed to include P2P Information Element (IE) information, such as a P2P identifier and a transmission rate supported by the smart device, which is not specifically limited in the present invention. Here, the P2P identifier is configured to indicate that the P2P data packet is consistent with the WiFi P2P protocol. The smart device surely may also broadcast the probe request data packet using channels 1, 6 and 11 when starting a specified application program (such as Miracast) configured for WiFi P2P connection, which is not specifically limited in the present invention.

In another embodiment, the smart device directly periodically broadcasts the P2P data packet at the current wireless working frequency band to avoid bad influence on other WiFi services due to frequent handover of the smart device among channels 1, 6 and 11 at the 2.4G frequency band during establishment of the wireless connection after the smart device acquires its own current wireless working frequency band, and the smart device and the smart terminal negotiate about establishment of the P2P group during subsequent connection establishment. Here, the P2P data packet at least includes the device information of the smart device, and the smart terminal establishes the wireless connection with the smart device according to the received device information. Similarly, the P2P data packet is also needed to include the P2P IE information, such as the P2P identifier and the transmission rate supported by the smart device, which is not specifically limited in the present invention.

Step 303: the smart terminal monitors multiple wireless working frequency bands supported by the smart terminal itself.

In the embodiment of the present invention, the smart terminal not only monitors probe request data packets on channels 1, 6 and 11 at the 2.4G frequency band, and also monitors P2P data packets at all wireless working frequency bands supported by the smart terminal, namely monitor the multiple wireless working frequency bands supported by the smart terminal, specifically including the following steps that:
when an operation for opening a P2P discovery function is detected, a wireless frequency band list is acquired, the wireless frequency band list including the multiple wireless working frequency bands supported by the smart terminal; and each wireless working frequency band in the wireless frequency band list is monitored to acquire the P2P data packet.

Step 304: when the smart terminal receives the P2P data packet at any wireless working frequency band, the P2P data packet is analyzed and identification information of the P2P group and device information of the smart device are obtained.

In the embodiment of the present invention, when receiving the P2P data packet at any wireless working frequency band in the wireless frequency band list supported by the smart terminal, the smart terminal analyzes the P2P data packet and the identification information of the P2P group and the device information of the smart device are obtained. That is, it is learned about that the P2P data packet is consistent with the WiFi P2P protocol according to the P2P identifier in the P2P data packet, and furthermore, the P2P data packet is analyzed to obtain the SSID of the P2P group and the device information such as the MAC address of the smart device and the name of the smart device. In addition, the smart terminal may also record information about the wireless working frequency band, i.e. the current wireless working frequency band of the smart device, where the P2P data packet is acquired for use during subsequent establishment of the wireless connection with the smart device.

It is to note that the P2P data packet sent by the smart device may further include the current wireless working frequency band of the smart device, and the smart terminal analyzes the P2P data packet to acquire the current wireless working frequency band of the smart device.

In another embodiment not being part of the invention, if the smart device does not establish the P2P group after acquiring its own current wireless working frequency band, when the P2P data packet is received at any wireless working frequency band, the P2P data packet is analyzed to obtain the device information of the smart device; and the smart terminal establishes the wireless connection with the smart device at the wireless working frequency band according to the device information. It is to note that the wireless working frequency band is consistent with the current wireless working frequency band on which the smart device sends the P2P data packet, that is, if the smart device sends the P2P data packet at the 5,220MHz frequency band, the smart terminal may receive the P2P data packet from the smart device at the 5,220MHz frequency band.

Step 305: the smart terminal adds the smart device into a P2P device list according to the device information of the smart device.

In the embodiment not being part of the invention, the smart terminal provides a P2P device interface for a user, and a device list, called the P2P device list in the embodiment of the present invention, of other WiFi devices currently discovered by the smart terminal or other WiFi devices which have established wireless connections is displayed in the P2P device interface. The smart terminal not only adds WiFi devices discovered at a P2P specific frequency band into the P2P device list, and also adds other WiFi devices detected at other wireless working frequency bands supported by the smart terminal into the P2P device list. When said other WiFi devices detected at said other wireless working frequency bands supported by the smart terminal are added into the P2P device list, the current wireless working frequency bands where said other WiFi devices are detected are added.

It is to note that said other WiFi devices in the embodiment not being part of the invention are all devices supporting the WiFi P2P protocol, and wireless connection establishment refers to WiFi P2P protocol-based wireless connection establishment. For a wireless connection not established based on the WiFi P2P protocol or a discovered device not supporting the WiFi P2P protocol, the smart terminal displays them in an ordinary wireless device list. For any device in the P2P device list, when a connection directed to the device is detected, the smart terminal establishes a wireless connection with the device based on the WiFi P2P protocol, and a detailed process refers to Step 306.

Step 306: when detecting a connection operation directed to the smart device, the smart terminal sends a request of joining a P2P group to the smart device according to the device information of the smart device and the identification information of the P2P group.

In the embodiment of the present invention, when the connection operation directed to the smart device in the P2P device list of the smart terminal is detected, the smart terminal joins the P2P group according to the device information of the smart device and the identification information of the P2P group, and a detailed process is implemented as follows: the device information of the smart device, the identification information of the P2P group and wireless working frequency band information of the smart device are acquired; the request of joining a P2P group is sent to the smart device at the wireless working frequency band indicated by the wireless working frequency band information, wherein the request of joining a P2P group includes the device information of the smart device and the identification information of the P2P group; and when receiving a joining confirmation message returned by the smart device according to the request of joining a P2P group, the smart terminal successfully joins the P2P group to finish establishing the wireless connection with the smart device.

In another embodiment not being part of the invention, if the smart device does not establish the P2P group after acquiring its own current wireless working frequency band, when the connection operation directed to the smart device is detected, the wireless connection is established with the smart device at the wireless working frequency band according to the device information. In the embodiment, the smart terminal and the smart device are needed to send data packets to each other to negotiate about establishment of the P2P group and determine a group owner and a group client, and then establish the wireless connection.

Step 307: the smart device returns a joining confirmation message to finish establishing a wireless connection with the smart terminal after receiving the request of joining a P2P group.

In the embodiment not being part of the invention, the smart device acquires the identification information of the P2P group in the request of joining a P2P group after receiving the request of joining a P2P group, determines whether the identification information of the P2P group matches with the identification information of its own P2P group or not, and if matching, returns a joining confirmation message to finish establishing the wireless connection with the smart terminal.

It is to note that the smart device returns a joining refuse message or does not perform any operation when determining that the received identification information of the P2P group does not match with the identification information of its own P2P group, it is determined that the wireless connection is failed to be established after the smart terminal receives the joining refuse message, or it is also determined that the wireless connection is failed to be established when the smart terminal does not receive any feedback message within a specified time period. Here, the specified time period may be 50 milliseconds, 100 milliseconds, 150 milliseconds and the like, which is not specifically limited in the present invention.

According to the method provided by the embodiment of the present invention, the current wireless working frequency band of the smart device is acquired; and the P2P data packet is periodically broadcast through the current wireless working frequency band, the P2P data packet at least including the device information of the smart device, and the smart terminal establishes the wireless connection with the smart device according to the received device information. Since the P2P data packet broadcast by the smart device at the current wireless working frequency band is at the same frequency band with other WiFi services on the smart device, handover may be not frequently performed among channels 1, 6 and 11 for broadcasting, and influence on normal use of said other WiFi services is avoided. Moreover, since the smart device establishes the P2P group before establishing the wireless connection with the smart terminal, the smart terminal directly joins the P2P group without negotiating about P2P group establishment after receiving the P2P data packet of the smart device, and the wireless connection establishment process is simplified.

Fig. 4 is a block diagram of a device for establishing a wireless connection, according to an exemplary embodiment not being part of the invention. Referring to Fig. 4, the device includes an acquisition module 401 and a sending module 402.

Here, the acquisition module 401 is connected with the sending module 402, and is configured to acquire a current wireless working frequency band of a smart device; and the sending module 402 is configured to periodically broadcast a P2P data packet through the current wireless working frequency band, wherein the P2P data packet at least includes device information of the smart device, and a wireless connection is established with the smart device by a smart terminal according to the received device information.

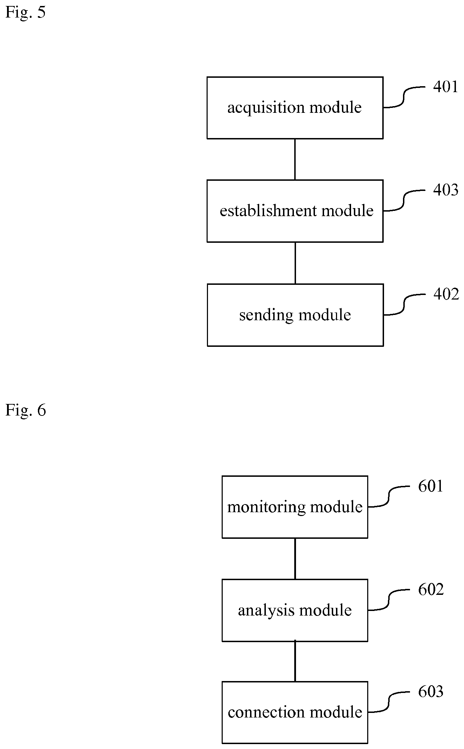

Referring to Fig. 5, the device further includes:
an establishment module 403, configured to establish a P2P group at the current wireless working frequency band based on the current wireless working frequency band, and determine the smart device as a group owner of the P2P group.

The P2P data packet further includes identification information of the P2P group, and the smart terminal joins the P2P group according to the received device information and the identification information of the P2P group.

Optionally, the P2P data packet is a beacon data packet.

Optionally, the acquisition module 401 is configured to send a wireless working frequency band acquisition request to a router connected with the smart device, receive a wireless working frequency band returned by the router, and determine the returned wireless working frequency band as the current wireless working frequency band.

According to the device provided by the embodiment not being part of the invention, the current wireless working frequency band of the smart device is acquired; and the P2P data packet is periodically broadcast through the current wireless working frequency band, the P2P data packet at least including the device information of the smart device, and the smart terminal establishes the wireless connection with the smart device according to the received device information. Since the P2P data packet broadcast by the smart device at the current wireless working frequency band is at the same frequency band with other WiFi services on the smart device, handover may be not frequently performed among channels 1, 6 and 11 for broadcasting, and influence on normal use of the other WiFi services is avoided.

Fig. 6 is a block diagram of another device for establishing a wireless connection, according to an exemplary embodiment. Referring to Fig. 6, the device includes a monitoring module 601, an analysis module 602 and a connection module 603.

Here, the monitoring module 601 is connected with the analysis module 602, and is configured to monitor multiple wireless working frequency bands supported by a smart terminal; the analysis module 602 is connected with the connection module 603, and is configured to, when a P2P data packet is received at any wireless working frequency band, analyze the P2P data packet and obtain device information of a smart device; and the connection module 603 is configured to establish a wireless connection with the smart device at the wireless working frequency band according to the device information.

Optionally, the connection module 603 is configured to add the smart device into a P2P device list according to the device information; and when a connection operation directed to the smart device is detected, establish the wireless connection with the smart device at the wireless working frequency band according to the device information.

Optionally, the monitoring module 601 is configured to, when an operation for opening a P2P discovery function is detected, acquire a wireless frequency band list, the wireless frequency band list including the multiple wireless working frequency bands supported by the smart terminal; and configured to monitor each wireless working frequency band in the wireless frequency band list to acquire the P2P data packet.

The analysis module 602 is further configured to analyze the P2P data packet and obtain identification information of a P2P group; and the connection module 603 is further configured to, when the connection operation directed to the smart device is detected, make the smart terminal join the P2P group according to the device information and the identification information of the P2P group.

According to the device provided by the embodiment of the present invention, the multiple wireless working frequency bands supported by the smart terminal are monitored; when the P2P data packet is received at any wireless working frequency band, the P2P data packet is analyzed to obtain the device information of the smart device; and the wireless connection is established with the smart device at the wireless working frequency band according to the device information. Since the smart terminal monitors P2P data packets at all its supported wireless working frequency bands and establishes the wireless connection with the smart device at the wireless working frequency band at which the P2P data packet sent by the smart device is received, the smart device is not needed to frequently switch channels 1, 6 and 11 for broadcasting, and the problem that other WiFi services of the smart device may not be normally used is solved.

With respect to the device in the above embodiment, the specific manners for performing operations for individual modules therein have been described in detail in the methods, which will not be elaborated herein.

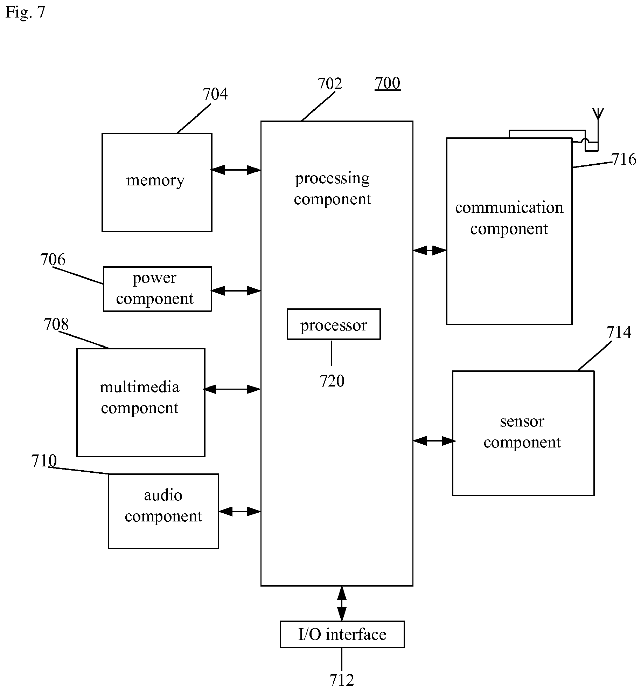

Fig. 7 is a block diagram of still another device for establishing a wireless connection, according to an exemplary embodiment not being part of the invention. For example, the device 700 may be a mobile phone, a computer, a digital broadcast terminal, a messaging device, a gaming console, a tablet, a medical device, fitness equipment, a Personal Digital Assistant (PDA) and the like.

Referring to Fig. 7, the device 700 may include one or more of the following components: a processing component 702, a memory 704, a power component 706, a multimedia component 708, an audio component 710, an Input/Output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the abovementioned methods. Moreover, the processing component 702 may include one or more modules which facilitate interaction between the processing component 702 and the other components. For instance, the processing component 702 may include a multimedia module to facilitate interaction between the multimedia component 708 and the processing component 702.

The memory 704 is configured to store various types of data to support the operation of the device 700. Examples of such data include instructions for any application programs or methods operated on the device 700, contact data, phonebook data, messages, pictures, video, etc. The memory 704 may be implemented by any type of volatile or nonvolatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 706 provides power for various components of the device 700. The power component 706 may include a power management system, one or more power supplies, and other components associated with the generation, management and distribution of power for the device 700.

The multimedia component 708 includes a screen providing an output interface between the device 700 and a user. In some embodiments not being part of the invention, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments not being part of the invention, the multimedia component 708 includes a front camera and/or a rear camera. The front camera and/or the rear camera may receive external multimedia data when the device 700 is in an operation mode, such as a photographing mode or a video mode. Each of the front camera and the rear camera may be a fixed optical lens system or have focusing and optical zooming capabilities.

The audio component 710 is configured to output and/or input an audio signal. For example, the audio component 710 includes a Microphone (MIC), and the MIC is configured to receive an external audio signal when the device 700 is in the operation mode, such as a call mode, a recording mode and a voice recognition mode. The received audio signal may be further stored in the memory 704 or sent through the communication component 716. In some embodiments not being part of the invention, the audio component 710 further includes a speaker configured to output the audio signal.

The I/O interface 712 provides an interface between the processing component 702 and a peripheral interface module, and the peripheral interface module may be a keyboard, a click wheel, a button and the like. The button may include, but not limited to: a home button, a volume button, a starting button and a locking button.

The sensor component 714 includes one or more sensors configured to provide status assessment in various aspects for the device 700. For instance, the sensor component 714 may detect an on/off status of the device 700 and relative positioning of components, such as a display and small keyboard of the device 700, and the sensor component 714 may further detect a change in a position of the device 700 or a component of the device 700, presence or absence of contact between the user and the device 700, orientation or acceleration/deceleration of the device 700 and a change in temperature of the device 700. The sensor component 714 may include a proximity sensor configured to detect presence of an object nearby without any physical contact. The sensor component 714 may also include a light sensor, such as a Complementary Metal Oxide Semiconductor (CMOS) or Charge Coupled Device (CCD) image sensor, configured for use in an imaging application. In some embodiments not being part of the invention, the sensor component 714 may also include an acceleration sensor, a gyroscope sensor, a magnetic sensor, a pressure sensor or a temperature sensor.

The communication component 716 is configured to facilitate wired or wireless communication between the device 700 and another device. The device 700 may access a communication-standard-based wireless network, such as a WiFi network, a 2nd-Generation (2G) or 3rd-Generation (3G) network or a combination thereof. In an exemplary embodiment not being part of the invention, the communication component 716 receives a broadcast signal or broadcast associated information from an external broadcast management system through a broadcast channel. In an exemplary embodiment not being part of the invention, the communication component 716 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment not being part of the invention, the device 700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods for establishing a wireless connection.

In an exemplary embodiment, there is also provided a non-transitory computer-readable storage medium including instructions, such as the memory 704 including instructions, and the instructions are executed by the processor 720 of the device 700 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

In an exemplary embodiment, there is also provided a non-transitory computer-readable storage medium, and instructions in the storage medium are executed by a processor of a mobile terminal to enable the mobile terminal to execute the abovementioned methods for establishing a wireless connection.

Other embodiments not being part of the invention will be apparent to those skilled in the art from consideration of the specification and practice of the present disclosure. The scope of the present invention is indicated by the following claims.

It will be appreciated that the present invention is not limited to the exact construction that has been described above and illustrated in the accompanying drawings, and that various modifications and changes may be made.

It is intended that the scope of the present invention only be limited by the appended claims.

### Industry Application

According to the technical solutions provided by the embodiments of the present disclosure, a current wireless working frequency band of a smart device is acquired; and a P2P data packet is periodically broadcast through the current wireless working frequency band, the P2P data packet at least including the device information of the smart device, and a smart terminal establishes a wireless connection with the smart device according to the received device information. Since the P2P data packet broadcast by the smart device at the current wireless working frequency band is at the same frequency band with other WiFi services on the smart device, handover may be not frequently performed among channels 1, 6 and 11 for broadcasting, and normal use of other WiFi services can be not influenced.

## Claims

1. A method for establishing a wireless connection by a smart device comprising:
acquiring (101) a current wireless working frequency band of the smart device, wherein the current wireless working frequency band is a frequency band shared by a plurality of Wireless Fidelity, WiFi, services on the smart device;
establishing a Peer to Peer, P2P, group at the current wireless working frequency band based on the current wireless working frequency band, and determining the smart device as a group owner of the P2P group; and
periodically broadcasting (102) a P2P data packet through the current wireless working frequency band, wherein the P2P data packet at least comprises device information of the smart device, such that a smart terminal establishes a wireless connection with the smart device at the current wireless working frequency band according to the device information after receiving the P2P data packet, and wherein
the P2P data packet further comprises identification information of the P2P group, such that the smart terminal joins the P2P group according to the received device information and the identification information of the P2P group after detecting an operation to connect to the smart device.

2. The method according to claim 1, wherein the P2P data packet is a beacon data packet.

3. The method according to claim 1 or 2, wherein acquiring the current wireless working frequency band of the smart device comprises:
sending a wireless working frequency band acquisition request to a router connected with the smart device; and
receiving a wireless working frequency band returned by the router, and determining the returned wireless working frequency band as the current wireless working frequency band.

4. A method for establishing a wireless connection by a smart terminal comprising:
monitoring (201) multiple wireless working frequency bands supported by the smart terminal;
when a Peer to Peer, P2P, data packet is received at any wireless working frequency band, analyzing (202) the P2P data packet and obtaining device information of a smart device, wherein the P2P data packet is periodically broadcast by the smart device through a frequency band shared by a plurality of Wireless Fidelity, WiFi, services on the smart device;
establishing (203) a wireless connection with the smart device at the wireless working frequency band according to the device information;
analyzing the P2P data packet and obtaining identification information of a P2P group, wherein the smart device is a group owner of the P2P group; and
when the operation to connect to the smart device is detected, joining, by the smart terminal, the P2P group according to the device information and the identification information of the P2P group.

5. The method according to claim 4, wherein
establishing the wireless connection with the smart device at the wireless working frequency band according to the device information comprises:
adding the smart device into a P2P device list according to the device information; and
when a connection operation directed to the smart device is detected, establishing the wireless connection with the smart device at the wireless working frequency band according to the device information;
and/or,
monitoring the multiple wireless working frequency bands supported by the smart terminal comprises:
when an operation for opening a P2P discovery function is detected, acquiring a wireless frequency band list, the wireless frequency band list comprising the multiple wireless working frequency bands supported by the smart terminal; and monitoring each wireless working frequency band in the wireless frequency band list to acquire the P2P data packet.

6. A smart device adapted to etablish a wireless connection comprising:
an acquisition module (401), configured to acquire a current wireless working frequency band of the smart device, wherein the current wireless working frequency band is a frequency band shared by a plurality of Wireless Fidelity, WiFi, services on the smart device;
an establishment module (403), configured to establish a P2P group at the current wireless working frequency band based on the current wireless working frequency band, and determine the smart device as a group owner of the P2P group; and
a sending module (402), configured to periodically broadcast a Peer to Peer, P2P, data packet through the current wireless working frequency band, wherein the P2P data packet at least comprises device information of the smart device, such that a smart terminal establishes a wireless connection with the smart device at the current wireless working frequency band according to the device information after receiving the P2P data packet, and wherein the P2P data packet further comprises identification information of the P2P group, such that the smart terminal joins the P2P group according to the received device information and the identification information of the P2P group after detecting an operation to connect to the smart device.

7. The device according to claim 6, wherein the P2P data packet is a beacon data packet.

8. The device according to claim 6 or 7, wherein the acquisition module (401) is configured to send a wireless working frequency band acquisition request to a router connected with the smart device, receive a wireless working frequency band returned by the router, and determine the wireless working frequency band as the current wireless working frequency band.

9. A smart terminal adapted to etablish a wireless connection comprising:
a monitoring module (601), configured to monitor multiple wireless working frequency bands supported by the smart terminal;
an analysis module (602), configured to, when a Peer to Peer, P2P, data packet is received at any wireless working frequency band, analyze the P2P data packet and
obtain device information of a smart device, wherein the P2P data packet is periodically broadcast by the smart device through a frequency band shared by a plurality of Wireless Fidelity, WiFi, services on the smart device; and
a connection module (603), configured to establish a wireless connection with the smart device at the wireless working frequency band according to the device information; wherein
the analysis module (602) is further configured to analyze the P2P data packet and obtain identification information of a P2P group, wherein the smart device is a group owner of the P2P group; and
the connection module (603) is further configured to, when the operation to connect to the smart device is detected, join the P2P group according to the device information and the identification information of the P2P group.

10. The terminal
according to claim 9, wherein the connection module (603) is configured to add the smart device into a P2P device list according to the device information;
and configured to, when a connection operation directed to the smart device is detected, establish the wireless connection with the smart device at the wireless working frequency band according to the device information;
and/or,
the monitoring module (601) is configured to, when an operation for opening a P2P discovery function is detected, acquire a wireless frequency band list, the wireless frequency band list comprising the multiple wireless working frequency bands supported by the smart terminal; and configured to monitor each wireless working frequency band in the wireless frequency band list to acquire the P2P data packet.

11. A computer program comprising computer-executable instructions which, when
executed by a computer associated with a terminal, configure the computer associated with the terminal to perform the steps of the method according to any one of claims 1 to 5.

12. A computer-readable storage medium having stored therein computer-executable instructions which, when executed by a computer associated with a terminal, configure the computer associated with the terminal to perform the steps of the method according to any one of claims 1 to 5.

## Patentansprüche

1. Verfahren zum Aufbau einer drahtlosen Verbindung durch ein intelligentes Gerät, das Folgendes umfasst:
Erfassen (101) eines aktuellen drahtlosen Arbeitsfrequenzbandes der intelligenten Vorrichtung, wobei das aktuelle drahtlose Arbeitsfrequenzband ein Frequenzband ist, das von einer Vielzahl von Wireless Fidelity, WiFi, Diensten auf der intelligenten Vorrichtung gemeinsam genutzt wird;
Einrichten einer Peer-to-Peer-, P2P-, Gruppe auf dem aktuellen drahtlosen Arbeitsfrequenzband, basierend auf dem aktuellen drahtlosen Arbeitsfrequenzband, und Bestimmen des intelligenten Geräts als ein Gruppenbesitzer der P2P-Gruppe; und
periodisches Rundsenden (102) eines P2P-Datenpakets über das aktuelle drahtlose Arbeitsfrequenzband, wobei das P2P-Datenpaket zumindest Vorrichtungsinformationen der intelligenten Vorrichtung umfasst, so dass ein intelligentes Endgerät eine drahtlose Verbindung mit der intelligenten Vorrichtung auf dem aktuellen drahtlosen Arbeitsfrequenzband gemäß den Vorrichtungsinformationen nach dem Empfangen des P2P-Datenpakets herstellt, und
wobei das P2P-Datenpaket ferner Identifikationsinformationen der P2P-Gruppe umfasst, so dass das intelligente Endgerät der P2P-Gruppe gemäß den empfangenen Vorrichtungsinformationen und den Identifikationsinformationen der P2P-Gruppe nach dem Erfassen eines Vorgangs zur Verbindung mit der intelligenten Vorrichtung beitritt.

2. Verfahren nach Anspruch 1, wobei das P2P-Datenpaket ein Baken- bzw. Beacon-Datenpaket ist.

3. Verfahren nach Anspruch 1 oder 2, wobei das Erfassen des aktuellen drahtlosen Arbeitsfrequenzbandes des intelligenten Geräts umfasst:
Senden einer Anfrage zur Erfassung eines drahtlosen Arbeitsfrequenzbandes an einen mit der intelligenten Vorrichtung verbundenen Router; und
Empfangen eines drahtlosen Arbeitsfrequenzbandes, das vom Router zurückgegeben wird, und Bestimmen des zurückgegebenen drahtlosen Arbeitsfrequenzbandes als das aktuelle drahtlose Arbeitsfrequenzband.

4. Verfahren zum Aufbau einer drahtlosen Verbindung durch ein intelligentes Endgerät, das Folgendes umfasst:
Überwachen (201) mehrerer drahtloser Arbeitsfrequenzbänder, die von dem intelligenten Endgerät unterstützt werden;
wenn ein Peer-to-Peer-, P2P-, Datenpaket auf einem beliebigen drahtlosen Arbeitsfrequenzband empfangen wird, Analysieren (202) des P2P-Datenpakets und Erhalten von Geräteinformationen eines intelligenten Geräts, wobei das P2P-Datenpaket periodisch von dem intelligenten Gerät über ein Frequenzband gesendet wird, das von einer Vielzahl von Wireless-Fidelity-, WiFi-Diensten auf dem intelligenten Gerät gemeinsam genutzt wird;
Herstellen (203) einer drahtlosen Verbindung mit dem intelligenten Gerät auf dem drahtlosen Arbeitsfrequenzband gemäß den Geräteinformationen;
Analysieren des P2P-Datenpakets und Erhalten von Identifikationsinformationen einer P2P-Gruppe, wobei die intelligente Vorrichtung ein Gruppenbesitzer der P2P-Gruppe ist; und
wenn die Operation zur Verbindung mit dem intelligenten Gerät erkannt wird,
Beitritt zur P2P-Gruppe durch das intelligente Endgerät gemäß den Geräteinformationen und den Identifikationsinformationen der P2P-Gruppe.

5. Verfahren nach Anspruch 4, wobei
das Herstellen der drahtlosen Verbindung mit dem intelligenten Gerät auf dem drahtlosen Arbeitsfrequenzband gemäß den Geräteinformationen umfasst:
Hinzufügen des intelligenten Geräts zu einer P2P-Geräteliste gemäß den Geräteinformationen; und
wenn ein an das intelligente Gerät gerichteter Verbindungsvorgang erkannt wird, Aufbauen der drahtlosen Verbindung mit dem intelligenten Gerät auf dem drahtlosen Arbeitsfrequenzband gemäß den Geräteinformationen;
und/oder,
wobei das Überwachen der von dem intelligenten Endgerät unterstützten mehreren drahtlosen Arbeitsfrequenzbänder umfasst:
wenn eine Operation zum Öffnen einer P2P-Ermittlungsfunktion erkannt wird, Erfassen einer drahtlosen Frequenzbandliste, wobei die drahtlose Frequenzbandliste die mehreren drahtlosen Arbeitsfrequenzbänder umfasst, die von dem intelligenten Endgerät unterstützt werden; und
Überwachen jedes drahtlosen Arbeitsfrequenzbandes in der drahtlosen Frequenzbandliste, um das P2P-Datenpaket zu erfassen.

6. Intelligentes Gerät, das zum Aufbau einer drahtlosen Verbindung geeignet ist, aufweisend:
ein Erfassungsmodul (401), das so konfiguriert ist, dass es ein aktuelles drahtloses Arbeitsfrequenzband der intelligenten Vorrichtung erfasst, wobei das aktuelle drahtlose Arbeitsfrequenzband ein Frequenzband ist, das von einer Vielzahl von Wireless Fidelity, WiFi, Diensten auf der intelligenten Vorrichtung gemeinsam genutzt wird;
ein Etablierungsmodul (403), das so konfiguriert ist, dass es eine P2P-Gruppe auf dem aktuellen drahtlosen Arbeitsfrequenzband auf der Grundlage des aktuellen drahtlosen Arbeitsfrequenzbandes einrichtet und das intelligente Gerät als einen Gruppeneigentümer der P2P-Gruppe bestimmt; und
ein Sendemodul (402), das so konfiguriert ist, dass es periodisch ein Peer-to-Peer-, P2P-, Datenpaket über das aktuelle drahtlose Arbeitsfrequenzband sendet, wobei das P2P-Datenpaket zumindest Geräteinformationen des intelligenten Geräts umfasst, so dass ein intelligentes Endgerät eine drahtlose Verbindung mit dem intelligenten Gerät auf dem aktuellen drahtlosen Arbeitsfrequenzband gemäß den Geräteinformationen nach dem Empfang des P2P-Datenpakets herstellt, und wobei das P2P-Datenpaket ferner Identifizierungsinformationen der P2P-Gruppe umfasst, so dass das intelligente Endgerät der P2P-Gruppe gemäß den empfangenen Geräteinformationen und den Identifizierungsinformationen der P2P-Gruppe beitritt,
nachdem eine Operation zur Verbindung mit dem intelligenten Gerät erkannt wurde.

7. Vorrichtung nach Anspruch 6, wobei das P2P-Datenpaket ein Baken- bzw. Beacon-Datenpaket ist.

8. Vorrichtung nach Anspruch 6 oder 7, wobei das Erfassungsmodul (401) so konfiguriert ist, dass es eine Erfassungsanforderung für ein drahtloses Arbeitsfrequenzband an einen mit der intelligenten Vorrichtung verbundenen Router sendet, ein von dem Router zurückgegebenes drahtloses Arbeitsfrequenzband empfängt und das drahtlose Arbeitsfrequenzband als das aktuelle drahtlose Arbeitsfrequenzband bestimmt.

9. Intelligentes Endgerät, das zum Aufbau einer drahtlosen Verbindung geeignet ist, umfasst:
ein Überwachungsmodul (601), das so konfiguriert ist, dass es mehrere von dem intelligenten Endgerät unterstützte drahtlose Arbeitsfrequenzbänder überwacht;
ein Analysemodul (602), das so konfiguriert ist, dass es, wenn ein Peer-to-Peer-, P2P-, Datenpaket auf einem beliebigen drahtlosen Arbeitsfrequenzband empfangen wird, das P2P-Datenpaket analysiert und Geräteinformationen eines intelligenten Geräts erhält, wobei das P2P-Datenpaket von dem intelligenten Gerät periodisch über ein Frequenzband gesendet wird, das von einer Vielzahl von Wireless-Fidelity-,
WiFi-Diensten auf dem intelligenten Gerät gemeinsam genutzt wird; und
ein Verbindungsmodul (603), das so konfiguriert ist, dass es eine drahtlose Verbindung mit dem intelligenten Gerät auf dem drahtlosen Arbeitsfrequenzband gemäß den Geräteinformationen herstellt; wobei
das Analysemodul (602) ferner konfiguriert ist, um das P2P-Datenpaket zu analysieren und Identifikationsinformationen einer P2P-Gruppe zu erhalten, wobei die intelligente Vorrichtung ein Gruppenbesitzer der P2P-Gruppe ist; und
das Verbindungsmodul (603) ferner so konfiguriert ist, dass es, wenn die Operation zum Verbinden mit dem intelligenten Gerät erkannt wird, der P2P-Gruppe gemäß den Geräteinformationen und den Identifikationsinformationen der P2P-Gruppe beitritt.

10. Endgerät nach Anspruch 9, wobei das Verbindungsmodul (603) so konfiguriert ist, dass es das intelligente Gerät gemäß den Geräteinformationen in eine P2P-Geräteliste hinzufügt; und so konfiguriert ist, dass es, wenn ein an das intelligente Gerät gerichteter Verbindungsvorgang erkannt wird, die drahtlose Verbindung mit dem intelligenten Gerät auf dem drahtlosen Arbeitsfrequenzband gemäß den Geräteinformationen herstellt;
und/oder,
das Überwachungsmodul (601) so konfiguriert ist, dass es, wenn ein Vorgang zum Öffnen einer P2P-Ermittlungsfunktion erfasst wird, eine drahtlose Frequenzbandliste erfasst, wobei die drahtlose Frequenzbandliste die mehreren drahtlosen Arbeitsfrequenzbänder umfasst, die von dem intelligenten Endgerät unterstützt werden; und so konfiguriert ist, dass es jedes drahtlose Arbeitsfrequenzband in der drahtlosen Frequenzbandliste überwacht, um das P2P-Datenpaket zu erfassen.

11. Computerprogramm mit computerausführbaren Anweisungen, die, wenn sie von einem mit einem Endgerät verbundenen Computer ausgeführt werden, den mit dem Endgerät verbundenen Computer so konfigurieren, dass er die Schritte des Verfahrens nach einem der Ansprüche 1 bis 5 durchführt.

12. Computerlesbares Speichermedium, auf dem computerausführbare Befehle gespeichert sind, die, wenn sie von einem mit einem Endgerät verbundenen Computer ausgeführt werden, den mit dem Endgerät verbundenen Computer so konfigurieren, dass er die Schritte des Verfahrens nach einem der Ansprüche 1 bis 5 durchführt.

## Revendications

1. Procédé pour établir une connexion sans fil par un dispositif intelligent, comportant les étapes consistant à :
acquérir (101) une bande de fréquences de travail sans fil actuelle du dispositif intelligent, dans lequel la bande de fréquences de travail sans fil actuelle est une bande de fréquences partagée par une pluralité de services WiFi (Wireless Fidelity) sur le dispositif intelligent ;
établir un groupe de pair à pair, P2P, sur la bande de fréquences de travail sans fil actuelle sur la base de la bande de fréquences de travail sans fil actuelle, et déterminer le dispositif intelligent comme étant un propriétaire de groupe du groupe P2P ; et
diffuser périodiquement (102) un paquet de données P2P via la bande de fréquences de travail sans fil actuelle, dans lequel le paquet de données P2P comporte au moins des informations de dispositif du dispositif intelligent, de telle sorte qu'un terminal intelligent établit une connexion sans fil avec le dispositif intelligent sur la bande de fréquences de travail sans fil actuelle en fonction des informations de dispositif après la réception du paquet de données P2P, et dans lequel le paquet de données P2P comporte en outre des informations d'identification du groupe P2P, de telle sorte que le terminal intelligent se joint au groupe P2P en fonction des informations de dispositif reçues et des informations d'identification du groupe P2P après la détection d'une opération de connexion au dispositif intelligent.

2. Procédé selon la revendication 1, dans lequel le paquet de données P2P est un paquet de données de balise.

3. Procédé selon la revendication 1 ou 2, dans lequel l'acquisition de la bande de fréquences de travail sans fil actuelle du dispositif intelligent comporte les étapes consistant à :
envoyer une requête d'acquisition de bande de fréquences de travail sans fil à un routeur connecté au dispositif intelligent ; et
recevoir une bande de fréquences de travail sans fil retournée par le routeur, et déterminer la bande de fréquences de travail sans fil retournée comme étant la bande de fréquences de travail sans fil actuelle.

4. Procédé pour établir une connexion sans fil par un terminal intelligent, comportant les étapes consistant à :
surveiller (201) de multiples bandes de fréquences de travail sans fil prises en charge par le terminal intelligent ;
lorsqu'un paquet de données de pair à pair, P2P, est reçu sur une quelconque bande de fréquences de travail sans fil,
analyser (202) le paquet de données P2P et obtenir des informations de dispositif d'un dispositif intelligent, dans lequel le paquet de données P2P est périodiquement diffusé par le dispositif intelligent via une bande de fréquences partagée par une pluralité de services WiFi (Wireless Fidelity) sur le dispositif intelligent ;
établir (203) une connexion sans fil avec le dispositif intelligent sur la bande de fréquences de travail sans fil en fonction des informations de dispositif ;
analyser le paquet de données P2P et obtenir des informations d'identification d'un groupe P2P, dans lequel le dispositif intelligent est un propriétaire de groupe du groupe P2P ; et
lorsque l'opération de connexion au dispositif intelligent est détectée, se joindre, par le terminal intelligent, au groupe P2P en fonction des informations de dispositif et
des informations d'identification du groupe P2P.

5. Procédé selon la revendication 4, dans lequel l'établissement de la connexion sans fil avec le dispositif intelligent sur la bande de fréquences de travail sans fil en fonction des informations de dispositif comporte les étapes consistant à :
ajouter le dispositif intelligent dans une liste de dispositifs P2P en fonction des informations de dispositif ; et
lorsqu'une opération de connexion concernant le dispositif intelligent est détectée, établir la connexion sans fil avec le dispositif intelligent sur la bande de fréquences de travail sans fil en fonction des informations de dispositif ;
et/ou,
la surveillance des multiples bandes de fréquences de travail sans fil prises en charge par le terminal intelligent comporte les étapes consistant à :
lorsqu'une opération de lancement d'une fonction de découverte P2P est détectée, acquérir une liste de bandes de fréquences sans fil, la liste de bandes de fréquences sans fil comportant les multiples bandes de fréquences de travail sans fil prises en charge par le terminal intelligent ; et
surveiller chaque bande de fréquences de travail sans fil dans la liste de bandes de fréquences sans fil pour acquérir le paquet de données P2P.

6. Dispositif intelligent adapté pour établir une connexion sans fil, comportant :
un module d'acquisition (401), configuré pour acquérir une bande de fréquences de travail sans fil actuelle du dispositif intelligent, dans lequel la bande de fréquences de travail sans fil actuelle est une bande de fréquences partagée par une pluralité de services WiFi (Wireless Fidelity) sur le dispositif intelligent ;
un module d'établissement (403), configuré pour établir un groupe P2P sur la bande de fréquences de travail sans fil actuelle sur la base de la bande de fréquences de travail sans fil actuelle, et déterminer le dispositif intelligent comme étant un propriétaire de groupe du groupe P2P ; et
un module d'envoi (402), configuré pour diffuser périodiquement un paquet de données de pair à pair, P2P, via la bande de fréquences de travail sans fil actuelle, dans lequel le paquet de données P2P comporte au moins des informations de dispositif du dispositif intelligent, de telle sorte qu'un terminal intelligent établit une connexion sans fil avec le dispositif intelligent sur la bande de fréquences de travail sans fil actuelle en fonction des informations de dispositif après la réception du paquet de données P2P, et dans lequel le paquet de données P2P comporte en outre des informations d'identification du groupe P2P,
de telle sorte que le terminal intelligent se joint au groupe P2P en fonction des informations de dispositif reçues et des informations d'identification du groupe P2P après la détection d'une opération de connexion au dispositif intelligent.

7. Dispositif selon la revendication 6, dans lequel le paquet de données P2P est un paquet de données de balise.

8. Dispositif selon la revendication 6 ou 7, dans lequel le module d'acquisition (401) est configuré pour envoyer une requête d'acquisition de bande de fréquences de travail sans fil à un routeur connecté au dispositif intelligent, recevoir une bande de fréquences de travail sans fil retournée par le routeur, et déterminer la bande de fréquences de travail sans fil comme étant la bande de travail de fréquences sans fil actuelle.

9. Terminal intelligent adapté pour établir une connexion sans fil, comportant :
un module de surveillance (601), configuré pour surveiller de multiples bandes de fréquences de travail sans fil prises en charge par le terminal intelligent ;
un module d'analyse (602), configuré pour, lorsqu'un paquet de données de pair à pair, P2P, est reçu sur une quelconque bande de fréquences de travail sans fil, analyser le paquet de données P2P et obtenir des informations de dispositif d'un dispositif intelligent, dans lequel le paquet de données P2P est périodiquement diffusé par le dispositif intelligent via une bande de fréquences partagée par une pluralité de services WiFi (Wireless Fidelity) sur le dispositif intelligent ; et
un module de connexion (603), configuré pour établir une connexion sans fil avec le dispositif intelligent sur la bande de fréquences de travail sans fil en fonction des informations de dispositif ; dans lequel
le module d'analyse (602) est en outre configuré pour analyser le paquet de données P2P et obtenir des informations d'identification d'un groupe P2P, dans lequel le dispositif intelligent est un propriétaire de groupe du groupe P2P ;
et
le module de connexion (603) est en outre configuré pour, lorsque l'opération de connexion au dispositif intelligent est détectée, se joindre au groupe P2P en fonction des informations de dispositif et des informations d'identification du groupe P2P.

10. Terminal selon la revendication 9, dans lequel le module de connexion (603) est configuré pour ajouter le dispositif intelligent dans une liste de dispositifs P2P en fonction des informations de dispositif ; et configuré pour, lorsqu'une opération de connexion concernant le dispositif intelligent est détectée, établir la connexion sans fil avec le dispositif intelligent sur la bande de fréquences de travail sans fil en fonction des informations de dispositif ;
et/ou,
le module de surveillance (601) est configuré pour, lorsqu'une opération de lancement d'une fonction de découverte P2P est détectée, acquérir une liste de bandes de fréquences sans fil, la liste de bandes de fréquences sans fil comportant les multiples bandes de fréquences de travail sans fil prises en charge par le terminal intelligent ; et configuré pour surveiller chaque bande de fréquences de travail sans fil dans la liste de bandes de fréquences sans fil pour acquérir le paquet de données P2P.

11. Programme informatique comportant des instructions exécutables par ordinateur qui, lorsqu'elles sont exécutées par un ordinateur associé à un terminal, configurent l'ordinateur associé au terminal pour exécuter les étapes du procédé selon l'une quelconque des revendications 1 à 5.

12. Support de stockage lisible par ordinateur dans lequel sont stockées des instructions exécutables par ordinateur qui, lorsqu'elles sont exécutées par un ordinateur associé à un terminal, configurent l'ordinateur associé au terminal pour exécuter les étapes du procédé selon l'une quelconque des revendications 1 à 5.
